# FASCICULE DE BREVET EUROPEEN

(11) **EP 1 605 148 B1**
(45) Date de publication et mention de la délivrance du brevet: **18.02.2015**
(21) Numéro de dépôt: 05291099.9
(22) Date de dépôt: 20.05.2005
(51) Int. Cl.: F02C 7/232

(54) **Procédé et système de protection des injecteurs de carburant de turbine à gaz**
Verfahren und Vorrichtung zum Sichern von Brennstoffeinspritzdüsen einer Gasturbine
Method and system for the protection of fuel nozzles in a gas turbine engine

(30) Priorité: 10.06.2004 FR 0406270
(43) Date de publication de la demande: 14.12.2005
(73) Titulaire: SNECMA, 75015 Paris (FR)
(72) Inventeur: Kervistin, Robert, 77350 Le Mee sur Seine (FR); De Giacomoni, Marion, 94320 Thiais (FR); Rodrigues, José, Roland, 77176 Nandy (FR); Rollin, Gilles Louis, 77115 Blandy les Tours (FR)
(74) Mandataire: Pichat, Thierry

(56) Documents cités:
- DE-A- 3 916 477
- US-A- 4 730 453
- US-A- 5 881 550
- US-A- 6 125 624

## Description

L'invention concerne un procédé et un système de protection des injecteurs de carburant dans les turbomachines et plus précisément les turboréacteurs.

Les injecteurs de carburant de turboréacteur sont très sensibles à la dégradation du carburant par la température. Ce phénomène, appelé cokéfaction, apparaît lorsque la température du carburant dépasse un seuil critique d'environ 204°C. Cette température provient de la flamme de la chambre de combustion dans laquelle les injecteurs se trouvent plongés. Les injecteurs sont très sensibles à ce phénomène en raison des perturbations d'écoulement du carburant, voire d'obstruction, qu'il entraîne.

Les perturbations d'écoulement dues à la cokéfaction ont des répercussions mécaniques sur les pièces situées en aval des injecteurs, mais aussi sur la qualité de la combustion. La cokéfaction entraîne des différences de débit entre injecteurs et par conséquent des différences de température de flammes dans la chambre de combustion, préjudiciables pour la chambre de combustion et la turbine puisqu'à l'origine de points chauds et donc de dégradations. Ces dégradations entraînent, d'une part une diminution de la durée de vie de la chambre de combustion et de la turbine et, d'autre part, un raccourcissement du temps moyen entre deux démontages des injecteurs car il est alors nécessaire de les nettoyer plus souvent. Par ailleurs, l'obturation des injecteurs a un impact sur la qualité de la pulvérisation du carburant, qui n'est plus uniforme. La combustion est alors mauvaise, ce qui entraîne une augmentation de la pollution des gaz émis par le turboréacteur.

Dans les cas les plus graves, la cokéfaction peut entraîner une impossibilité de démarrer un moteur au sol, une impossibilité de redémarrer un moteur en vol, la perforation thermique de la chambre de combustion, ou encore la destruction des aubes de turbine.

Lorsqu'il y a injection de carburant, le risque de cokéfaction est très faible car c'est le carburant lui-même qui évacue les calories et les injecteurs sont conçus et dimensionnés de manière à ce que la température du carburant n'atteigne jamais la limite de température de 204°C.

Au cours du fonctionnement d'un turboréacteur, les phases critiques vis à vis de la cokéfaction sont différentes suivant le type d'injecteur utilisé.
Dans le cas d'une chambre de combustion simple tête, c'est à dire avec une seule rangée circonférentielle d'injecteurs, tous les injecteurs fonctionnent en même temps, quel que soit le point de fonctionnement de la turbomachine considéré. Dans ce cas, la phase critique est l'arrêt du moteur. En effet, le rayonnement et la température du turboréacteur restent très élevés pendant une longue durée après l'arrêt du moteur, alors que les injecteurs ne débitent plus de carburant et n'évacuent plus les calories.
Dans le cas de chambres de combustion dites « double-têtes », c'est à dire avec deux rangées circonférentielles d'injecteurs de carburant, ou dans le cas de chambres de combustion comportant une seule rangée circonférentielle d'injecteurs dit « double-têtes », c'est à dire munis de deux têtes d'injection de carburant, les phases critiques sont l'arrêt du moteur, mais aussi les cas de fonctionnement avec une partie seulement des injecteurs, respectivement des têtes d'injection, qui sont opérationnels et qui débitent du carburant, les autres injecteurs, respectivement têtes d'injection, étant au repos. Par exemple, alors qu'au décollage toutes les têtes d'injection sont alimentées en carburant pour fournir le maximum de puissance, en croisière, le besoin en puissance, et donc l'apport en carburant, sont moindres et ne nécessitent le fonctionnement que d'une partie des injecteurs ou des têtes d'injection.

Par ailleurs, afin d'améliorer la qualité de l'injection et par là même la qualité de la combustion, la tendance est à la diminution de la taille des gouttes de carburant injecté et à l'utilisation d'injecteurs de type multipoints. Les injecteurs multipoints sont munis de plusieurs orifices de sorties de carburant, les diamètres de ces orifices pouvant, sur un même injecteur, être différents. L'augmentation du nombre de points d'injection permet d'homogénéiser la pulvérisation dans l'ensemble de l'espace formé par la chambre de combustion. La quantité de carburant injectée est identique à la quantité injectée dans le cas de l'utilisation d'injecteurs munis d'un seul orifice de sortie, ce qui implique que les orifices de sortie des injecteurs multipoints ont des diamètres plus petits. Cette diminution de diamètre des orifices, et donc des canalisations d'alimentation en carburant internes à l'injecteur, rend ce type d'injecteur d'autant plus sensible à la cokéfaction. Les injecteurs multipoints peuvent être utilisés dans des chambres simple ou double tête.

A l'heure actuelle, deux méthodes permettent de protéger les injecteurs de la cokéfaction : la purge, lors de l'arrêt du moteur, et le refroidissement, dans le cas des chambres de combustion avec deux rangées circonférencielles de têtes d'injection uniquement.

La purge est une méthode de protection des injecteurs de carburant bien connue et largement utilisée, notamment sur les turboréacteurs. Comme décrit dans le brevet DE3916477, jusqu'à présent, l'ensemble de la rampe d'injection de carburant est purgée en même temps que les injecteurs par injection d'air comprimé, l'air étant stocké, refroidi et éventuellement re-comprimé. Dans ce brevet, le clapet anti-retour, empêchant toute remontée d'air de purge dans le circuit d'alimentation en carburant, est implanté en amont de la rampe d'alimentation en carburant. Ceci impose, lors de la purge, de vider la rampe d'injection de carburant et les injecteurs, libérant ainsi dans la chambre de combustion une quantité importante de carburant, qui risque de s'enflammer. En outre, pour assurer un redémarrage du moteur, il est alors nécessaire de remplir à nouveau ces rampes d'injection de carburant, d'où un temps long pour y parvenir. Pour cette raison, cette méthode ne peut s'appliquer ni à des injecteurs « double-têtes », ni au cas des chambres de combustion « double-têtes », lorsqu'une seule partie des injecteurs fonctionne. En effet, elle nécessite la purge d'une importante partie du circuit d'injection de carburant ce qui n'est pas compatible avec les temps de commutation, c'est à dire avec les temps requis pour le passage d'un cas de fonctionnement à un autre, ces temps devant être très courts.

Le document US-A-4730453 (et FR 2588920) décrit un dispositif de protection des injecteurs de postcombustion d'un turboréacteur par purge des injecteurs non alimentés en carburant, au moyen de vannes de commutation interposées entre les injecteurs, une pompe d'alimentation en carburant et une source d'air comprimé. Les vannes de commutation sont à l'extérieur de la tuyère ou du carter externe du turboréacteur et sont reliées aux injecteurs par des conduits qu'il faut vider de leur carburant pour la protection des injecteurs, puis remplir à nouveau.

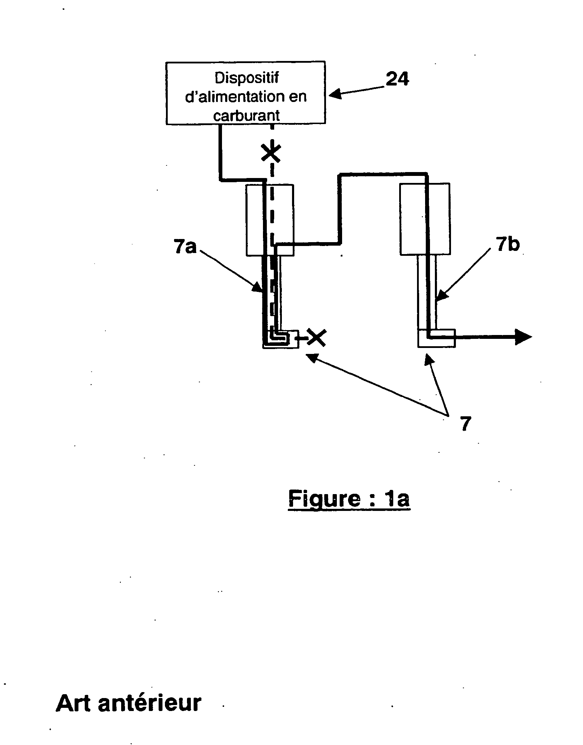

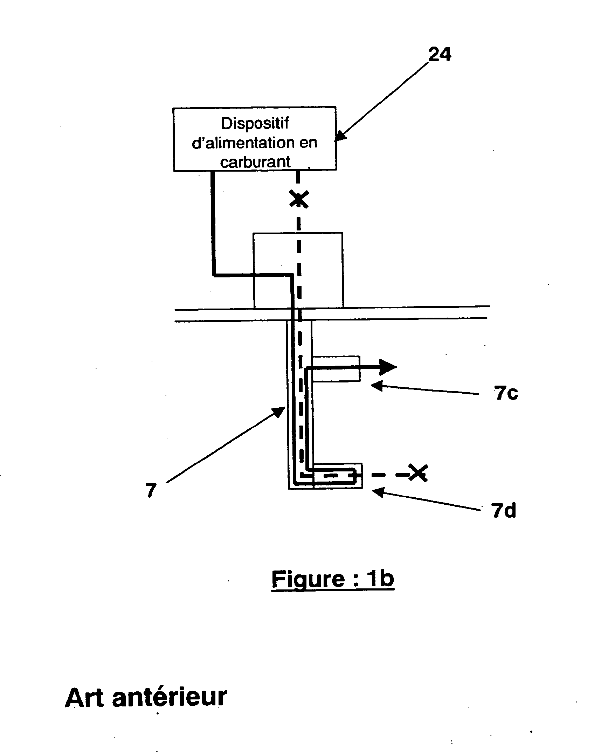

La méthode de protection des injecteurs de carburant par refroidissement est utilisée notamment dans le cas des chambres de combustion double-têtes comme représentée à la figure 1a. Cette méthode consiste à faire circuler le carburant à l'intérieur des injecteurs au repos 7a avant de l'envoyer dans les injecteurs opérationnels 7b par lesquels il sera éjecté dans la chambre de combustion. Cette méthode est aussi appliquée avec les injecteurs dits «double-têtes », comme le montre la figure 1b. Dans ce cas, le carburant circule dans la tête 7d qui ne débite pas pour la refroidir avant d'être éjecté dans la chambre par la deuxième tête 7c d'injecteur. Un premier inconvénient de ce système de prévention de la cokéfaction est lié à la complexité du circuit de refroidissement à mettre en place. Un second inconvénient est lié au fait que le refroidissement n'a d'effet que pendant le fonctionnement du moteur. En effet, dès l'arrêt du moteur, la circulation de carburant servant à refroidir les injecteurs est stoppée, et l'ensemble des injecteurs est alors soumis au rayonnement du moteur, donc aux risques de cokéfaction.

Le but de l'invention est de palier aux inconvénients des systèmes de protection existants en définissant un procédé et un système de protection des injecteurs de carburant, pouvant remplacer les systèmes de protection par purge et par refroidissement existants et pouvant s'appliquer à tous les types d'injecteurs et pour toutes les chambres de combustion, qu'elles soient simple ou doubles-têtes.

Pour cela, selon l'invention, le procédé de protection d'injecteurs de carburant d'une turbomachine consiste, pendant des phases de fonctionnement où l'alimentation en carburant d'au moins une tête d'injection est stoppée, à injecter de l'air comprimé dans un circuit d'alimentation des injecteurs en carburant, l'air étant injecté directement et uniquement dans chaque tête d'injection de carburant non alimentée, en aval d'un clapet anti-retour associé à la tête d'injection et disposé sur une conduite de carburant s'étendant dans la tête d'injection.

Avantageusement, l'injection d'air comprimé dans les têtes d'injection non alimentées en carburant est pilotée par des moyens de commande, à partir d'un signal d'entrée représentatif du régime de fonctionnement de la turbomachine. Préférentiellement, l'air comprimé est prélevé en sortie d'un compresseur de la turbomachine, puis stocké dans un réservoir. L'air comprimé stocké est ensuite injecté directement dans chaque tête d'injection de carburant non alimentée par l'intermédiaire d'une conduite de carburant s'étendant dans la tête d'injection.

L'invention concerne également un système de protection des injecteurs de carburant d'une turbomachine comportant des injecteurs de carburant ayant au moins une tête d'injection de carburant, une conduite de prélèvement d'air comprimé reliée à une entrée d'un réservoir d'air via un premier clapet anti-retour, le réservoir d'air comportant un système de refroidissement et une sortie reliée à une conduite d'injection d'air via une rampe d'injection d'air et un second clapet anti-retour implanté de façon à s'ouvrir dans le sens de l'injection d'air, la conduite d'injection d'air étant directement raccordée à au moins une tête d'injection de carburant non alimentée en aval d'un clapet anti-retour monté dans une conduite de carburant s'étendant dans la tête d'injection.

Avantageusement, les clapets anti-retour sont positionnés à l'intérieur des injecteurs de carburant.

Le système comporte en outre une vanne de sortie de l'air comprimé du réservoir vers la rampe d'injection d'air commandée par un calculateur, la vanne de sortie laissant passer l'air sous pression uniquement dans les têtes d'injection non alimentées en carburant.

Avantageusement, le dispositif comporte des moyens de régulation du débit d'air de purge tels que, par exemple, un diaphragme.

Alternativement, les moyens de régulation du débit d'air de purge comportent une servovalve, commandée par le calculateur, disposée en aval du réservoir.

Avantageusement, la conduite de prélèvement d'air comprimé est destinée à être reliée à la sortie d'un compresseur de la turbomachine.

La présente invention concerne par ailleurs une turbomachine comportant au moins un compresseur et au moins un injecteur de carburant, l'injecteur comportant au moins une tête d'injection de carburant équipée d'une conduite d'alimentation en carburant, comportant un système de protection de l'injecteur monté entre une sortie du compresseur et la conduite d'alimentation en carburant de la tête d'injection.

D'autres particularités ou avantages de l'invention apparaîtront clairement dans la suite de la description donnée à titre d'exemple non limitatif et faite en regard des figures annexées qui représentent :
- figure 1a : une illustration du principe de refroidissement d'injecteurs de carburant dans le cas d'une chambre « double-tête » par circulation de carburant dans les injecteurs au repos, selon l'art antérieur,
- figure 1b : une illustration du principe de refroidissement d'injecteurs de carburant par circulation de carburant dans les injecteurs dans le cas d'injecteurs dits « double-tête », selon l'art antérieur,
- figure 2 : une vue schématique en coupe d'un turboréacteur équipé d'un système de protection des injecteurs de carburant conformément à l'invention.
- figure 3 : une représentation schématique détaillée d'un système de protection des injecteurs de carburant conformément à l'invention,
- figure 4a : une application de l'invention dans le cas d'une chambre « double-tête » fonctionnant avec une partie seulement des injecteurs débitant du carburant, pour laquelle la purge des injecteurs non alimentés n'est réalisée qu'à l'arrêt de la turbomachine,
- figure 4b : une application de l'invention dans le cas d'une chambre « double-tête » fonctionnant avec une partie seulement des injecteurs débitant du carburant, pour laquelle la purge des injecteurs non alimentés est réalisée à l'arrêt et pendant le fonctionnement de la turbomachine,
- figure 5a : une application de l'invention dans le cas d'injecteurs dits « double-tête », dont une tête seulement sur les deux que comprend chaque injecteur débite du carburant, et dont la purge des têtes d'injecteurs non alimentées n'est réalisée qu'à l'arrêt de la turbomachine,
- figure 5b : une application de l'invention dans le cas d'injecteurs dits « double-tête », dont une tête seulement sur les deux que comprend chaque injecteur débite du carburant, et dont la purge des têtes d'injecteurs non alimentées est réalisée à l'arrêt et pendant le fonctionnement de la turbomachine.

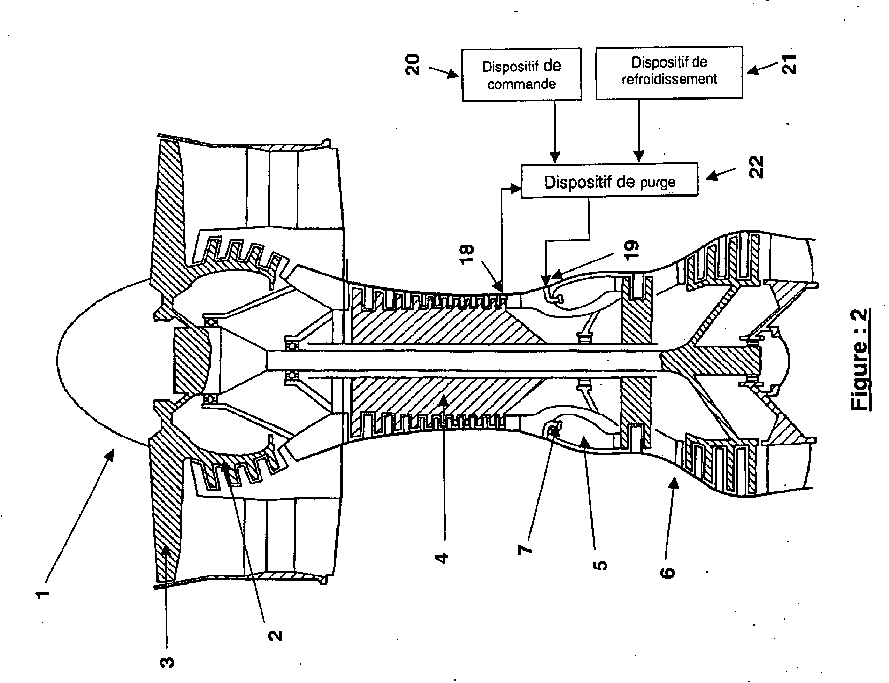

La Figure 2 représente une vue schématique en coupe d'un exemple de turboréacteur **1,** équipé d'un exemple de dispositif de protection **22** des injecteurs de carburant. Le turboréacteur comporte essentiellement un compresseur basse pression **2** muni d'une soufflante **3,** un compresseur haute pression **4,** une chambre de combustion **5,** et une turbine **6.** Le carburant est amené jusqu'aux injecteurs de carburant **7** par l'intermédiaire de conduites d'alimentation en carburant **8,** reliées à un dispositif d'alimentation en carburant 24 par une rampe d'alimentation en carburant (non représentée). Le carburant est ensuite éjecté dans la chambre **5.**

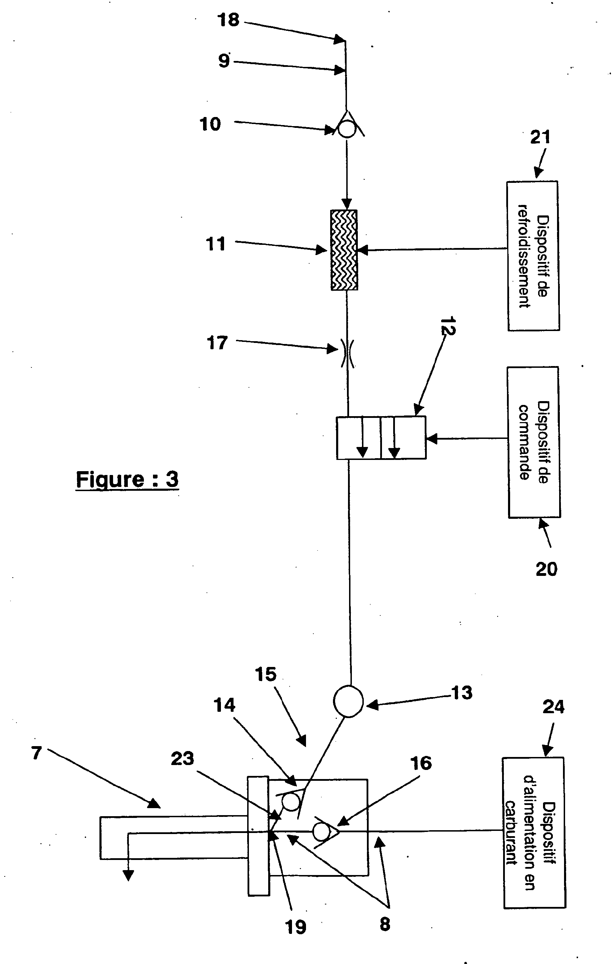

Le dispositif de protection des injecteurs de carburant, appelé aussi dispositif de purge, représenté sur les figures 2 et 3, comprend essentiellement une conduite de prélèvement d'air **9,** un premier clapet anti-retour **10,** un réservoir d'air fortement comprimé **11** pouvant être équipé d'ailettes de refroidissement, une vanne de commande de purge **12,** une rampe d'injection d'air **13,** un second clapet anti-retour **14** et une conduite d'injection d'air **15.**

L'injecteur 7 comporte une conduite de carburant interne 8 sur laquelle est connecté un clapet anti-retour 16. Ce clapet 16 peut-être à l'intérieur de l'injecteur ou à l'extérieur de l'injecteur, mais toujours en aval de la rampe d'alimentation en carburant.

Dans l'exemple représenté, le dispositif de purge est connecté entre une sortie **18** du compresseur **4** du turboréacteur et une canalisation **23** reliée à une entrée **19** d'un injecteur de carburant **7.**

Lors du fonctionnement du turboréacteur, l'air comprimé est prélevé en sortie du compresseur haute pression **4,** via la conduite de prélèvement **9** et est accumulé dans le réservoir **11.** Le réservoir **11** est équipé d'un clapet anti-retour **10** évitant sa décharge dans le compresseur **4.** L'air pouvant être à haute température en sortie du compresseur **4,** le réservoir est avantageusement équipé de moyens de refroidissement **21** tels que, par exemple, un échangeur air/air dont la source froide provient par exemple du débit d'air délivré par la soufflante **3.** Cet échange thermique peut être effectué par exemple en implantant des ailettes de refroidissement sur le réservoir **11.** En fonctionnement normal, le carburant, injecté dans la conduite **8** et l'injecteur **7,** évacue lui-même les calories créées par la combustion. Sa pression d'injection, c'est à dire la pression régnant alors dans la conduite **8** et en amont du clapet anti-retour **16,** étant supérieure à la pression régnant en amont du clapet **14,** le clapet anti-retour **14** empêche toute remontée de carburant dans la rampe d'injection d'air **13.** Ce clapet **14** peut être situé dans l'injecteur **7,** comme illustré à la figure 2, ou sur la rampe d'injection d'air **13,** comme illustré sur les figures suivantes que nous détaillerons par la suite.

Lorsque l'alimentation en carburant est interrompue, notamment à l'arrêt du turboréacteur, la pression dans l'injecteur **7** et dans la conduite d'alimentation en carburant **8** diminue. Il en va de même de la pression dans le compresseur haute pression **4,** dans la chambre **5** et dans la turbine **6.** La vanne de commande de purge **12,** commandée par des moyens de commande **20** tels que, par exemple, un calculateur, s'ouvre et l'air sous-pression sort du réservoir **11.** Le signal d'entrée de ces moyens de commande peut être, par exemple, le niveau de pression atteint en sortie du compresseur, ou encore le régime de rotation du turboréacteur. La pression en amont du clapet **14** devient supérieure à la pression en aval. Le clapet **14** s'ouvre alors et libère l'air comprimé dans la conduite d'injection d'air **15,** reliée à l'injecteur par la conduite **23.** L'air comprimé ainsi libéré va purger l'injecteur **7** en évacuant le carburant s'y trouvant vers la chambre **5.** La pression dans la conduite **15** et en amont du clapet **14** étant supérieure à la pression en amont du clapet **16,** le clapet anti-retour **16** empêche toute remontée d'air dans la rampe d'alimentation en carburant. Le clapet **16** peut être situé dans l'injecteur 7 ou sur la rampe d'alimentation en carburant. Un étranglement, réalisé ici par un diaphragme **17,** permet de limiter la vitesse de purge. Le diaphragme **17** peut être remplacé par une servovalve, commandée par le calculateur **20.** Il permet de doser le débit d'air de purge pour limiter le débit de carburant injecté dans la chambre **5.** Ceci permet d'éviter l'apparition de points chauds issus de l'inflammation du carburant purgé, dans le voisinage de la turbine **6.** Elle assure de ce fait la viabilité du système de purge sur une large plage de fonctionnement tout en préservant l'intégrité mécanique de la chambre de combustion **5** et des modules situés en aval. Le dosage de débit est effectué en fonction de la pression disponible dans le réservoir et de la pression régnant dans la chambre de combustion **5.**

Le dispositif de purge peut être relié à un injecteur de carburant comme décrit en liaison avec la Figure 2, mais il peut aussi être relié à plusieurs injecteurs ou têtes d'injection. Dans ce cas, la rampe d'injection d'air **13** est reliée à chacun des injecteurs ou têtes d'injection de carburant par l'intermédiaire de clapets anti-retour **14** et de conduites d'injection d'air **15 .** Cette rampe a pour but de distribuer l'air de façon homogène et simultanée à tous les injecteurs ou têtes d'injection lorsqu'ils ne sont plus alimentés en carburant. Il y a alors un clapet anti-retour 16 par injecteur ou tête d'injection.

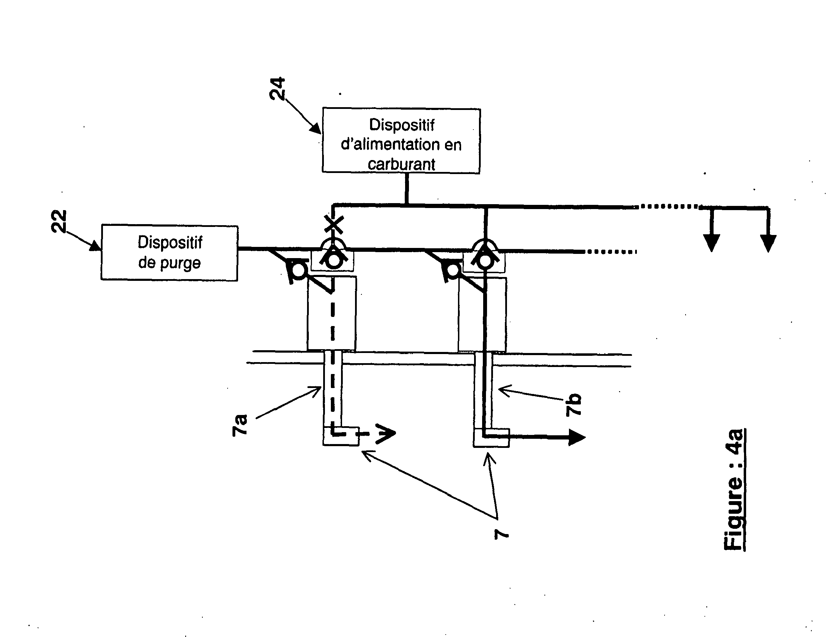

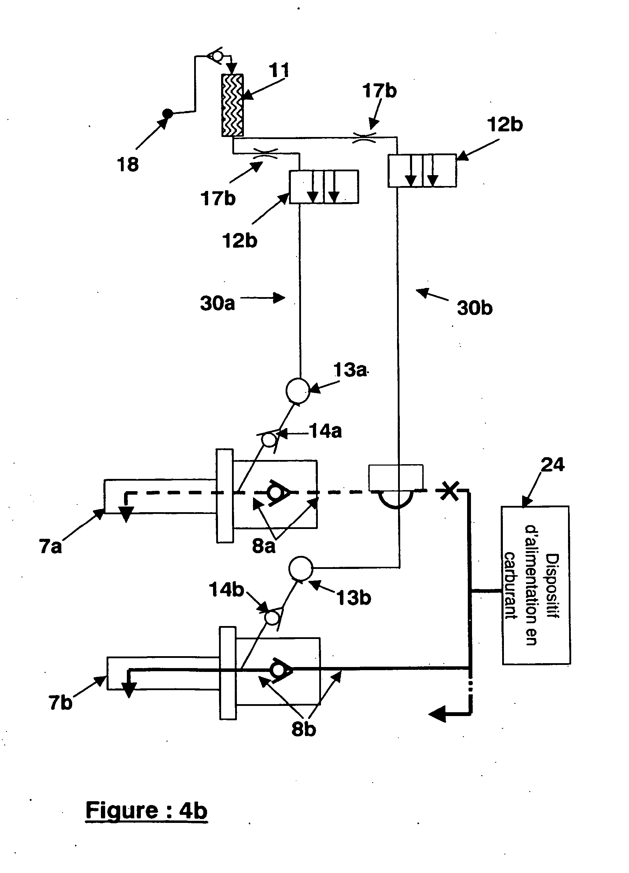

Les Figures 4a et 4b montrent l'application de l'invention dans le cas d'une chambre de combustion « double-tête » dans laquelle les injecteurs ne sont pas tous alimentés en carburant en même temps, c'est à dire dans le cas où les injecteurs ne fonctionnent pas tous en même temps. Sur ces figures sont représentés deux injecteurs **7a** et **7b.** L'injecteur **7a** n'est pas alimenté et ne débite donc pas de carburant. L'injecteur **7b** est alimenté et injecte du carburant dans la chambre de combustion.

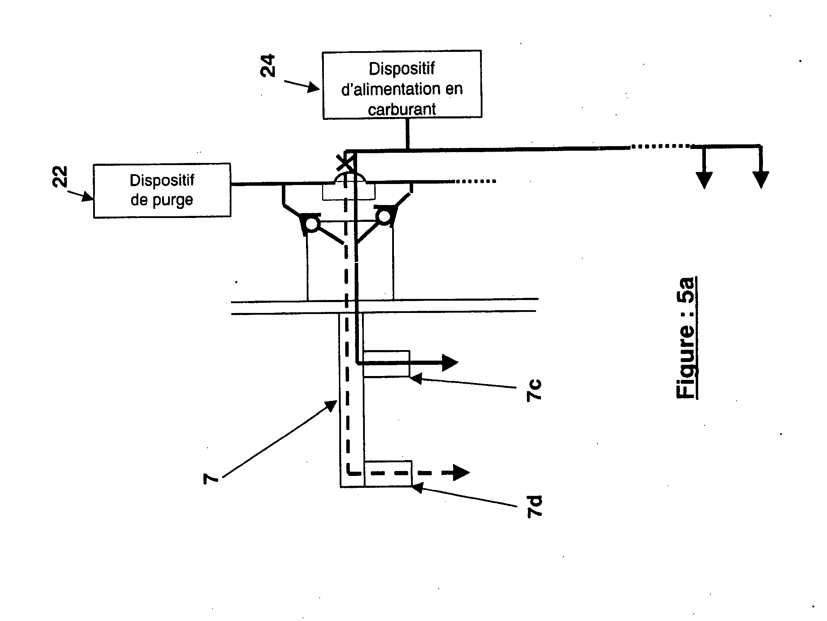

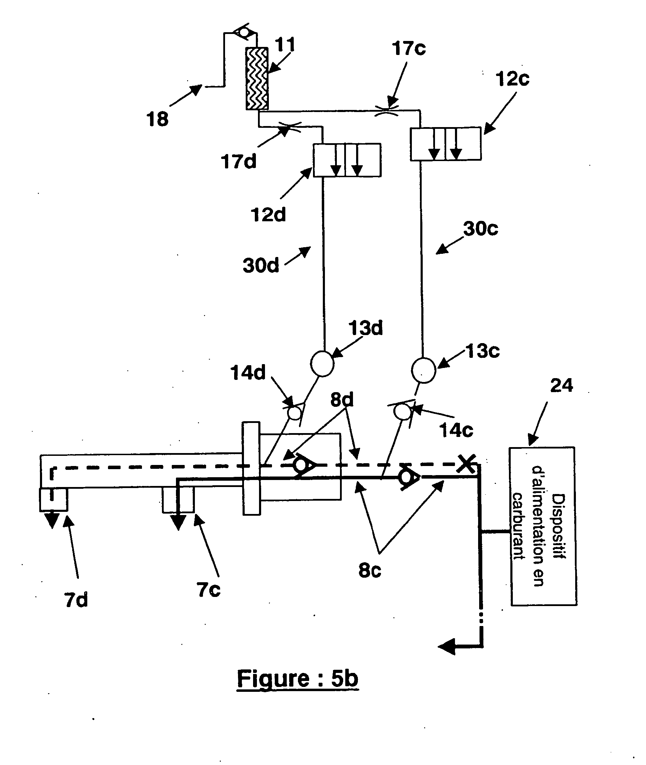

Les Figures **5a** et **5b** montrent l'application de l'invention dans le cas d'injecteurs dits « double-têtes » **7** pour lesquels une des deux têtes seulement est alimentée en carburant. Ces figures montrent un injecteur **7** muni de deux conduites internes d'alimentation en carburant, chaque conduite aboutissant à une première tête **7c,** respectivement une seconde tête **7d,** d'injection de carburant. La tête **7c** est alimentée et injecte du carburant dans la chambre de combustion. La tête **7d** n'est pas alimentée et ne débite donc pas de carburant.

Deux cas de figure se présentent.

Les figures 4a et 5a illustrent le cas où l'on veut purger les injecteurs, respectivement les têtes d'injection, non alimentés uniquement lors de l'arrêt de la turbomachine. Dans ce cas, l'ensemble des injecteurs **7a** et **7b,** respectivement des têtes d'injection **7c** et **7d,** est relié à un seul dispositif de purge, dont le fonctionnement est identique à celui décrit précédemment, en liaison avec la figure 3.

Les figures 4b et 5b illustrent le cas où l'on veut purger les injecteurs, respectivement les têtes d'injection, non alimentés à l'arrêt et pendant le fonctionnement de la turbomachine. Dans ce cas, deux circuits de purge **30a** et **30b,** respectivement **30c** et **30d,** sont mis en place.
Dans un souci de clarté, la suite de la description adopte un système de numérotation avec indice. L'indice « i » peut prendre les valeurs a, b, c ou d selon le circuit de purge considéré.
En sortie d'un réservoir **11** d'air sous pression commun aux deux circuits sur les figures, chaque circuit de purge comporte, un étranglement **17i,** une vanne de commande de purge **12i** et une rampe d'injection d'air **13i.** Alternativement, chaque circuit de purge peut comporter son propre réservoir. Le premier des deux circuits **30a,** respectivement **30d,** est relié à tous les injecteurs **7a,** respectivement les têtes d'injection **7d,** c'est à dire à tous les injecteurs, respectivement les têtes d'injection, qui vont devoir être purgés en même temps pendant le fonctionnement et à l'arrêt de la turbomachine. Le second circuit, numéroté **30b,** respectivement **30c,** est relié à tous les injecteurs **7b,** respectivement les têtes d'injection **7c,** c'est à dire à tous les injecteurs qui ne seront purgés qu'à l'arrêt de la turbomachine.

Pendant les phases de fonctionnement nécessitant le maximum d'énergie, les injecteurs **7a** et **7b,** respectivement les têtes d'injection **7c** et **7d,** débitent ensemble du carburant dans la chambre de combustion **5.** Pendant les phases de fonctionnement nécessitant une énergie réduite, seuls les injecteurs **7b,** respectivement les têtes d'injection **7c,** débitent du carburant tandis que les injecteurs **7a,** respectivement les têtes d'injection **7d,** ne sont plus alimentés en carburant. La pression dans l'injecteur **7a,** respectivement les têtes d'injection **7d,** et dans la conduite d'alimentation en carburant **8a,** respectivement **8d,** diminue. Il en va de même de la pression dans le compresseur haute pression **4,** dans la chambre **5** et dans la turbine **6.**

La vanne de commande de purge **12a,** respectivement **12d,** commandée par les moyens de commande **20,** s'ouvre et l'air sous-pression sort du réservoir 11. La purge des injecteurs et des têtes d'injection s'effectue alors conformément à la description faite précédemment, en liaison avec la figure 3. Enfin, lors de l'arrêt de la turbomachine, les deux vannes de commande de purge **12a** et **12b,** respectivement **12c** et **12d,** s'ouvrent et l'air sous pression vient purger l'ensemble des injecteurs et des têtes d'injection.

L'invention n'est pas limitée aux exemples de réalisation précisément décrits. En particulier, elle s'applique également dans le cas d'une turbomachine simple corps comportant un seul compresseur et une seule turbine. Dans ce cas, le prélèvement d'air s'effectue préférentiellement en sortie du compresseur. Le prélèvement d'air pourrait aussi être effectué directement en sortie d'un réservoir externe.

## Revendications

1. Procédé de protection d'injecteurs de carburant d'une turbomachine, les injecteurs comportant au moins une tête d'injection de carburant, consistant, pendant des phases de fonctionnement où l'alimentation en carburant d'au moins une tête d'injection est stoppée, à injecter de l'air comprimé dans un circuit d'alimentation en carburant de ladite tête d'injection, **caractérisé en ce que** l'air comprimé est injecté par un clapet anti-retour (14) dans une conduite de carburant (8) interne de la tête d'injection de carburant (7) non alimentée en aval d'un clapet anti-retour (16) associé à la tête d'injection et disposé sur la conduite de carburant interne (8) en aval d'une rampe d'alimentation en carburant des injecteurs ou sur ladite rampe d'alimentation en carburant.

2. Procédé de protection d'injecteurs de carburant conformément à la revendication 1, **caractérisé en ce que** l'injection d'air comprimé dans les têtes d'injection non alimentées en carburant est pilotée à partir d'un signal représentatif de la phase de fonctionnement de la turbomachine.

3. Procédé de protection d'injecteurs de carburant conformément à la revendication 1 ou 2, **caractérisé en ce que** l'air comprimé est prélevé en sortie d'un compresseur de la turbomachine, puis stocké dans un réservoir (11), et **en ce que** l'air comprimé stocké est injecté directement dans chaque tête d'injection de carburant non alimentée par l'intermédiaire de la conduite de carburant (8) précitée.

4. Système de protection des injecteurs de carburant d'une turbomachine comportant des injecteurs de carburant (7) ayant au moins une tête d'injection de carburant, une conduite (9) de prélèvement d'air comprimé reliée à une entrée d'un réservoir d'air (11) via un premier clapet anti-retour (10), le réservoir d'air (11) comportant un système de refroidissement (21) et une sortie reliée à une conduite d'injection d'air (15) via une rampe d'injection d'air (13) et un second clapet anti-retour (14)implanté de façon à s'ouvrir dans le sens de l'injection d'air, **caractérisé en ce que** la conduite d'injection d'air (15) est raccordée par un clapet anti-retour (14) à une conduite de carburant interne (8) de la tête d'injection de carburant (7) non alimentée, en aval d'un clapet anti-retour (16) disposé sur chaque conduite de carburant interne (8)en aval d'une rampe d'alimentation en carburant des injecteurs ou sur cette rampe d'alimentation.

5. Système selon la revendication 4, **caractérisé en ce que** les clapets anti-retour (16) disposés sur chaque conduite de carburant interne (8) sont positionnés à l'intérieur de chaque injecteur de carburant (7).

6. Système selon la revendication 4 ou 5, **caractérisé en ce qu'**il comporte en outre une vanne (12) de sortie de l'air comprimé du réservoir (11) vers la rampe d'injection d'air (13) commandée par un calculateur, la vanne de sortie (12) laissant passer l'air sous pression uniquement dans les têtes d'injection (7) non alimentées en carburant.

7. Système selon la revendication 6, **caractérisé en ce qu'**il comporte des moyens de régulation (17) du débit d'air de purge.

8. Système selon la revendication 7, **caractérisé en ce que** les moyens de régulation (17) du débit d'air de purge comportent un diaphragme.

9. Système selon la revendication 7, **caractérisé en ce que** les moyens de régulation (17) du débit d'air de purge comportent une servovalve commandée par le calculateur.

10. Système selon l'une quelconque des revendications 4 à 9, **caractérisé en ce que** la conduite (9) de prélèvement d'air comprimé est destinée à être reliée à la sortie d'un compresseur (4) de la turbomachine.

11. Turbomachine comportant au moins un compresseur et au moins un injecteur de carburant, l'injecteur comportant au moins une tête d'injection de carburant équipée d'une conduite (8) d'alimentation en carburant, **caractérisée en ce qu'**elle comporte un système de protection de l'injecteur selon l'une quelconque des revendications 4 à 10, le système de protection étant monté entre une sortie du compresseur et la conduite d'alimentation en carburant (8).

## Patentansprüche

1. Verfahren zum Schutz von Kraftstoffinjektoren einer Turbomaschine bzw. eines Turbotriebwerks, wobei die Injektoren zumindest einen Kraftstoffeinspritzkopf enthalten, welches Verfahren darin besteht, während Betriebsphasen, in denen die Kraftstoffversorgung zumindest eines Einspritzkopfes angehalten wird, Druckluft in einen Versorgungskreislauf zur Versorgung des Einspritzkopfes mit Kraftstoff einzublasen, **dadurch gekennzeichnet, dass** die Druckluft über ein Rückschlagventil (14) in eine innere Kraftstoffleitung (8) des unbeaufschlagten Kraftstoffeinspritzkopfes (7) eingeblasen wird, und zwar stromabwärts eines Rückschlagventils (16), das dem Einspritzkopf zugeordnet und an der inneren Kraftstoffleitung (8) stromabwärts einer Zuführleitung zur Kraftstoffversorgung der Injektoren oder an der Zuführleitung zur Kraftstoffversorgung angeordnet ist.

2. Verfahren zum Schutz von Kraftstoffinjektoren nach Anspruch 1, **dadurch gekennzeichnet, dass** das Einblasen von Druckluft in die nicht mit Kraftstoff beaufschlagten Einspritzköpfe ausgehend von einem Signal gesteuert wird, das repräsentativ ist für die Betriebsphase der Turbomaschine bzw. des Turbotriebwerks.

3. Verfahren zum Schutz von Kraftstoffinjektoren nach Anspruch 1 oder 2, **dadurch gekennzeichnet, dass** die Druckluft am Auslass eines Verdichters der Turbomaschine bzw. des Turbotriebwerks entnommen wird, dann in einem Speicher (11) gespeichert wird, und dass die gespeicherte Druckluft direkt in jeden unbeaufschlagten Kraftstoffeinspritzkopf über die vorgenannte Kraftstoffleitung (9) eingeblasen wird.

4. System zum Schutz von Kraftstoffinjektoren einer Turbomaschine bzw. eines Turbotriebwerks, enthaltend Kraftstoffinjektoren (7), die zumindest einen Kraftstoffeinspritzkopf enthalten, eine Leitung (9) zur Entnahme von Druckluft, die mit einem Einlass eines Luftspeichers (11) über ein erstes Rückschlagventil (10) verbunden ist, wobei der Luftspeicher (11) ein Kühlsystem (21) und einen Auslass aufweist, der mit einer Lufteinblasleitung (15) über eine Luftzuführleitung (13) und ein zweites Rückschlagventil (14) verbunden ist, das so eingesetzt ist, dass es in der Richtung der Lufteinblasung öffnet, **dadurch gekennzeichnet, dass** die Lufteinblasleitung (15) über ein Rückschlagventil (14) an eine innere Kraftstoffleitung (8) des unbeaufschlagten Krafstoffeinspritzkopfes (7) stromabwärts eines Rückschlagventils (16) angeschlossen ist, das an jeder inneren Kraftstoffleitung (8) stromabwärts einer Zuführleitung zur Kraftstoffversorgung der Injektoren oder an dieser Zuführleitung angeordnet ist.

5. System nach Anspruch 4, **dadurch gekennzeichnet, dass** die Rückschlagventile (16), die an jeder inneren Kraftstoffleitung (8) angeordnet sind, innerhalb eines jeden Kraftstoffinjektors (7) positioniert sind.

6. System nach Anspruch 4 oder 5, **dadurch gekennzeichnet, dass** es ferner ein Ventil (12) zum Auslass von Druckluft aus dem Speicher (11) zur Luftzuführleitung (13) umfasst, das über einen Rechner gesteuert wird, wobei das Auslassventil (12) die unter Druck stehende Luft nur in die nicht mit Kraftstoff beaufschlagten Einspritzköpfe (7) strömen lässt.

7. System nach Anspruch 6, **dadurch gekennzeichnet, dass** es Einstellmittel (17) zum Einstellen des Ausblasluftstroms enthält.

8. System nach Anspruch 7, **dadurch gekennzeichnet, dass** die Einstellmittel (17) zum Einstellen des Ausblasluftstroms eine Membran enthalten.

9. System nach Anspruch 7, **dadurch gekennzeichnet, dass** die Einstellmittel (17) des Ausblasluftstroms ein Servoventil enthalten, das über den Rechner gesteuert wird.

10. System nach einem der Ansprüche 4 bis 9, **dadurch gekennzeichnet, dass** die Leitung (9) zum Entnehmen von Druckluft dazu bestimmt ist, mit dem Auslass eines Verdichters (4) der Turbomaschine bzw. des Turbotriebwerks verbunden zu werden.

11. Turbomaschine bzw. Turbotriebwerk, enthaltend zumindest einen Verdichter und zumindest einen Kraftstoffinjektor, wobei der Injektor zumindest einem Kraftstoffeinspritzkopf enthält, der mit einer Leitung (8) zur Kraftstoffversorgung ausgestattet ist, **dadurch gekennzeichnet, dass** sie bzw. es ein System zum Schutz des Injektors nach einem der Ansprüche 4 bis 10 enthält, wobei das Schutzsystem zwischen einem Auslass des Verdichters und der Kraftstoffversorgungsleitung (8) angeordnet ist.

## Claims

1. A method for protecting fuel injectors of a turboshaft engine, the injectors comprising at least one fuel injection head, consisting, during functioning phases where the fuel feed of at least one injection head is stopped, in injecting compressed air into a circuit for feeding with fuel said fuel injection head, **characterized in that** the compressed air is injected through a non-return valve (14) into an internal fuel duct (8) of the fuel injection head (7) that is not being fed, downstream of a non-return valve (16) associated to the injection head and disposed on the internal fuel duct (8), downstream a fuel feed manifold for feeding with fuel the injectors or on said fuel feed manifold.

2. The method for protecting fuel injectors as claimed in claim 1, **characterized in that** the injection of compressed air into the injection heads that are not being fed with fuel is controlled on the basis of a signal representing the operational phase of the turboshaft engine.

3. The method for protecting fuel injectors as claimed in either one of claims 1 or 2, **characterized in that** the compressed air is taken from the output of a compressor of the turboshaft engine, and then stored in a tank (11) and **characterized in that** the stored compressed air is injected directly into each fuel injection head that is not being fed by the intermediary of said fuel duct (8).

4. A system for protecting the fuel injectors of a turboshaft engine comprising fuel injectors (7) having at least one fuel injection head, one duct (9) for taking compressed air connected to an input of an air tank (11) via a first non-return valve (10), the air tank (11) comprising a cooling system (21) and an output connected to an air injection duct (15) via an air injection manifold (13) and a second non-return valve (14) installed in such a way as to open in the direction of the air injection, **characterized in that** the air injection duct (15) is connected through a non-return valve (14) to an internal fuel duct (8) of the fuel injection head (7) that is not being fed, downstream of a non-return valve (16) disposed on each fuel duct (8), downstream a fuel feed manifold for feeding with fuel the injectors or on said fuel feed manifold.

5. The system as claimed in claim 4, **characterized in that** the non-return valves (16) disposed in each internal fuel duct (8) are positioned inside each fuel injector (7).

6. The system as claimed in either one of claims 4 or 5, **characterized in that** it comprises a valve (12) for the outlet of the compressed air from the tank (11) to the air injection manifold (13) controlled by a computer, the outlet valve (12) allowing pressurized air to pass solely into the injection heads (7) that are not being fed with fuel.

7. The system as claimed in claim 6, **characterized in that** it comprises means (17) of regulating the purging air flow rate.

8. The system as claimed in claim 7, **characterized in that** the means (17) for regulating the purging air flow rate comprise a diaphragm.

9. The system as claimed in claim 7, **characterized in that** the means (17) of regulating the purging air flow rate comprise a servo-valve controlled by the computer.

10. The system as claimed in any one of claims 4 to 9, **characterized in that** the duct (9) for taking compressed air is designed to be connected to the output of a compressor (4) of the turboshaft engine.

11. A turboshaft engine comprising at least one compressor and at least one fuel injector, the injector comprising at least one fuel injection head equipped with a fuel supply duct (8), **characterized in that** it comprises a system for protecting the injector as claimed in any one of claims 4 to 10, the protection system being mounted between an output of the compressor and the fuel feed duct.
